# EUROPEAN PATENT APPLICATION

(11) **EP 4 775 965 A1**
(43) Date of publication of application: **15.07.2026**
(21) Application number: 24900915.0
(22) Date of filing: 15.11.2024
(51) Int. Cl.: G01N 21/76

(54) **IN VITRO DIAGNOSTIC EQUIPMENT EMPLOYING CARTRIDGE USING CHEMILUMINESCENCE**

(30) Priority: 06.12.2023 KR 20230175261
(71) Applicant: Boditech Med Inc., Chuncheon-si, Gangwon-do 24398 (KR)
(72) Inventor: HA, Yong Hwang, Chuncheon-si Gangwon-do 24403 (KR); CHO, Chu Hyun, Chuncheon-si Gangwon-do 24209 (KR); OH, Young Jin, Chuncheon-si Gangwon-do 24401 (KR); JUNG, Ji Woon, Chuncheon-si Gangwon-do 24278 (KR); YEO, Kang In, Yeongcheon-si Gyeongsangbuk-do 38837 (KR); YOO, Jin, Chuncheon-si Gangwon-do 24416 (KR)
(74) Representative: Louis Pöhlau Lohrentz
(86) International application number: PCT/KR2024/018065
(87) International publication number: WO 2025/121728

(57) **Abstract**

The present invention relates to an in vitro diagnostic device using a cartridge that employs chemiluminescence. The in vitro diagnostic device of the present invention comprises: a cartridge holder made of a light-impermeable material and configured to support a side surface of a cartridge; an upper dark chamber wall whose faces other than a bottom face are blocked with a light-impermeable material, the upper dark chamber wall being configured to move upward and downward and, upon measurement of a quantity of light, descending to closely contact an upper surface of the cartridge holder and an upper peripheral portion of a measurement well of the cartridge; and a lower dark chamber wall whose faces other than a top face are blocked with a light-impermeable material, the lower dark chamber wall being configured to move upward and downward and, upon measurement of a quantity of light, ascending to closely contact a lower surface of the cartridge holder and a lower peripheral portion of the measurement well of the cartridge. The in vitro diagnostic device of the present invention is capable of implementing a dark chamber selectively only around the measurement well among the plurality of wells of the cartridge.

## Description

### TECHNICAL FIELD

The present invention relates to an in vitro diagnostic device using a cartridge that employs chemiluminescence, and more particularly, to an in vitro diagnostic device capable of implementing a dark chamber selectively around a measurement well of a cartridge.

### BACKGROUND OF THE INVENTION

There is known a device that qualitatively or quantitatively analyzes a specific component from a biological specimen based on an immunoassay method, using a disposable cartridge configured by connecting various wells and loaded with reagents. In particular, when chemiluminescent reagents are used, analysis with very high precision is possible. A cartridge for chemiluminescence includes not only reagent wells for loading various reagents but also a reaction well, a washing well, and a measurement well. Specifically, in the measurement well, the biological specimen reacts with the chemiluminescent reagent to emit light, the quantity of which is determined by the concentration of the target component. An optical system can measure the quantity of light in proximity to the measurement well.

Since the intensity of light generated when using chemiluminescent reagents is weak, a PhotoMultiplier Tube (PMT) having very high sensitivity is often employed. Because a PMT-based optical system is extremely sensitive, even an extremely small amount of stray light can generate a background signal, and therefore a very high level of dark chamber implementation is required. Furthermore, the PMT responds to incident light even during idle periods when no measurement is being performed. When light enters the optical system, the background signal increases, the optical system operates unnecessarily, electrons accumulate inside the PMT, and various malfunctions may occur as a result. Therefore, implementation of a dark chamber is essential in an in vitro diagnostic device using a cartridge that employs chemiluminescence; however, because the cartridge is long, implementing a dark chamber for the entire cartridge results in a large dark-chamber size and high cost.

### SUMMARY OF THE INVENTION

### Technical Problem

Accordingly, one object of the present invention is to selectively implement a dark chamber only around the measurement well of a cartridge that employs chemiluminescence.

Another object of the present invention is to allow light generated by chemiluminescence to enter the PMT only during measurement, and to prevent light from entering the PMT during idle periods when no measurement is performed.

### Technical Solution

To achieve the foregoing objects, the present invention provides an in vitro diagnostic device using a cartridge that employs chemiluminescence, the device comprising: a cartridge holder made of a light-impermeable material and configured to support the cartridge; an upper dark chamber wall whose faces other than the bottom face are blocked with a light-impermeable material, the upper dark chamber wall being configured to move upward or downward and, upon measurement of a quantity of light, descending to closely contact an upper surface of the cartridge holder and an upper peripheral portion of a measurement well of the cartridge; and a lower dark chamber wall whose faces other than the top face are blocked with a light-impermeable material, the lower dark chamber wall being configured to move upward or downward and, upon measurement of a quantity of light, ascending to closely contact a lower surface of the cartridge holder and a lower peripheral portion of the measurement well of the cartridge.

The in vitro diagnostic device may further comprise an injector needle installed in the upper dark chamber wall and configured to inject a chemiluminescent reagent into the measurement well. The injector needle may be installed in the upper dark chamber wall at an acute angle with respect to a wall surface of the measurement well.

The in vitro diagnostic device may further comprise an optical system installed in the lower dark chamber wall and including a PMT configured to measure a quantity of light emitted from a side surface or a bottom surface of the measurement well. The optical system may include a blocking shutter configured to prevent light from entering the PMT when the lower dark chamber wall descends.

Preferably, the optical system comprises: an optical system body attached to the lower dark chamber wall and having an optical path formed therein between the measurement well and the PMT; and a push pin connected to a lower portion of the blocking shutter, wherein the blocking shutter is configured to block the optical path when the push pin is pressed, and to open the optical path when the push pin is not pressed.

### Advantageous Effects

The present invention having the foregoing configuration can selectively implement a dark chamber only around the measurement well of a cartridge that employs chemiluminescence. In addition, the present invention allows light generated by chemiluminescence to enter the PMT only during measurement, and prevents light from entering the PMT during idle periods when no measurement is performed.

### BRIEF DESCRIPTION OF DRAWINGS

FIG. 1 is a configuration diagram of a cartridge using chemiluminescence employed in the present invention.
FIG. 2 is a top plan view of a cartridge holder according to an embodiment of the present invention.
FIG. 3 illustrates mounting of the cartridge shown in FIG. 1 onto the cartridge holder shown in FIG. 2.
FIG. 4 illustrates a state in which the cartridge shown in FIG. 1 is mounted on the cartridge holder shown in FIG. 2.
FIG. 5 illustrates a diagnostic device according to an embodiment of the present invention implementing a dark chamber around the measurement well of the cartridge.
FIG. 6 illustrates operation of a blocking shutter in an optical system according to an embodiment of the present invention.

### DETAILED DESCRIPTION OF THE PREFERRED EMBODIMENTS

In order to fully understand the present invention, preferred embodiments of the present invention will be described with reference to the accompanying drawings. The embodiments of the present invention may be modified in various forms, and the scope of the present invention should not be construed as being limited to the embodiments described in detail below. The present embodiments are provided to more completely explain the present invention to those having average knowledge in the relevant technical field. Accordingly, the shapes of elements in the drawings may be exaggerated for clarity. It should be noted that the same members in each drawing are sometimes shown with the same reference numerals. Detailed descriptions of known functions and configurations that may unnecessarily obscure the gist of the present invention are omitted.

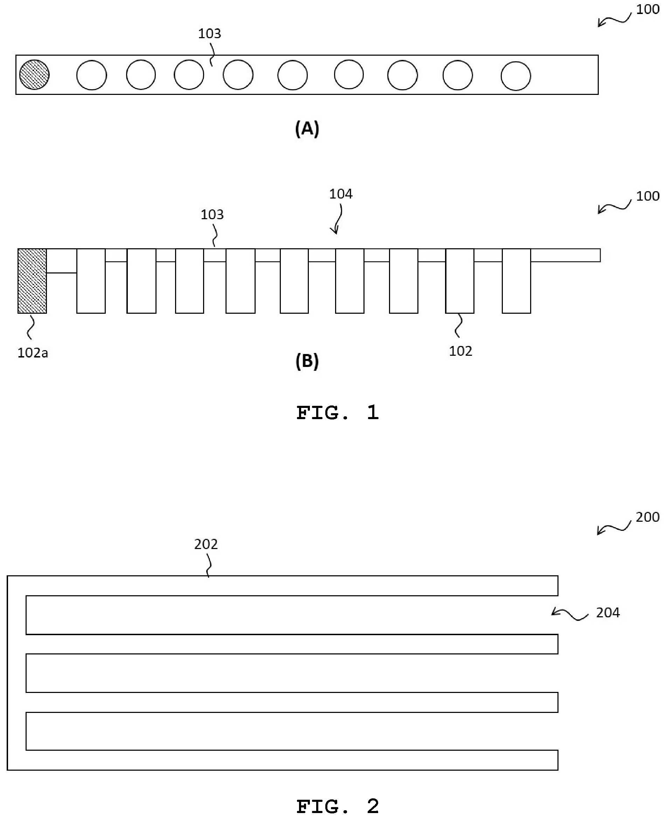

FIG. 1 is an exemplary diagram of a cartridge using chemiluminescence employed in the present invention, where FIG. 1A is a top plan view and FIG. 1B is a side view. As shown, a cartridge 100 includes a plurality of wells 102 and a cartridge frame 104. The cartridge frame 104 includes well connectors 103 connecting one well to another. The cartridge 100 has a measurement well 102a at an end thereof.

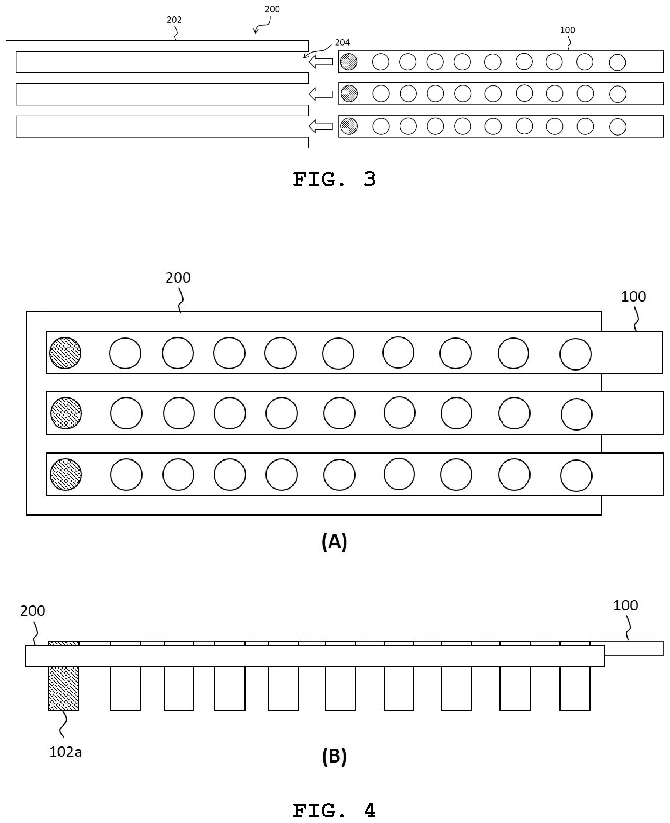

FIG. 2 is a top plan view of a cartridge holder 200 according to an embodiment of the present invention. FIG. 3 illustrates the cartridge 100 being mounted on the cartridge holder 200. FIG. 4 illustrates a state in which the cartridge 100 is mounted on the cartridge holder 200, where FIG. 4A is a plan view and FIG. 4B is a side view.

The cartridge holder 200 includes a holder frame 202, and the holder frame 202 forms three slits 204 that support the cartridge 100. The cartridge holder 200 is made of a light-impermeable material; however, for ease of understanding, the cartridge holder 200 is shown as semi-transparent in FIG. 4B. The holder frame 202 supports at least a portion of a side surface and at least a portion of a bottom surface of the cartridge 100.

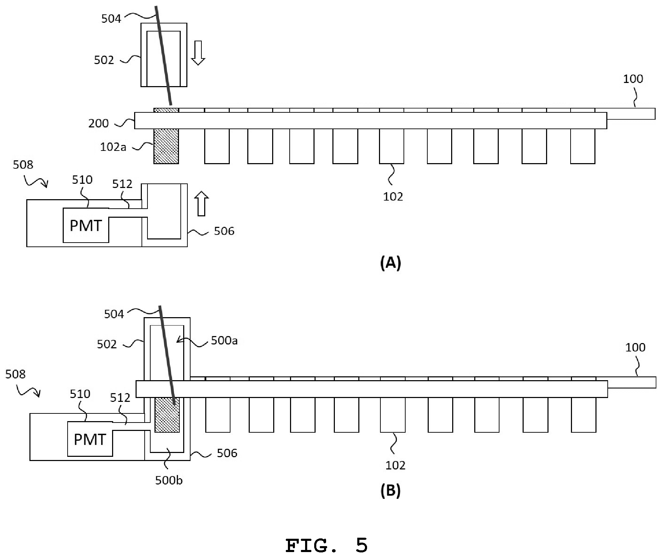

FIG. 5 illustrates an in vitro diagnostic device according to an embodiment of the present invention implementing a dark chamber around the measurement well 102a of the cartridge 100. As shown, the diagnostic device includes an upper dark chamber wall 502 and a lower dark chamber wall 506. FIG. 5A shows a state in which the upper dark chamber wall 502 descends and the lower dark chamber wall 506 ascends, and FIG. 5B illustrates a state in which the upper dark chamber wall 502 and the lower dark chamber wall 506 are in close contact with the cartridge 100 and the cartridge holder 200, thereby forming dark chambers 500a and 500b around the measurement well 102a.

The upper dark chamber wall 502 has faces other than the bottom face directed toward the measurement well 102a blocked with a light-impermeable material. The upper dark chamber wall 502 is configured to move upward or downward, and descends during light quantity measurement to closely contact the upper surface of the cartridge holder 200 and the upper peripheral portion of the measurement well 102a of the cartridge. In this specification, "upper surface," "lower surface," "upper," and "lower" are based on a state in which the well 102 can retain a sample or the like, as shown in FIGS. 5(a) and 5(b).

An injector needle 504 is installed in the upper dark chamber wall 502. The injector needle 504 is configured to inject a chemiluminescent reagent into the measurement well 102a. The injector needle 504 is integrally installed in the upper dark chamber wall 502 at an acute angle with respect to a wall surface of the measurement well 102a, preferably inclined at 0 to 60 degrees. Because the injector needle 504 is installed at an inclination with respect to the wall surface of the measurement well 102a, the chemiluminescent reagent can be stably injected into the measurement well 102a. If the inclination of the injector needle 504 is too large, the lower end of the injector needle 504 may collide with the wall surface of the measurement well 102a while the upper dark chamber wall 502 descends.

The lower dark chamber wall 506 has faces other than the top face directed toward the measurement well 102a blocked with a light-impermeable material. The lower dark chamber wall 506 is configured to move upward or downward, and ascends during light quantity measurement to closely contact the lower surface of the cartridge holder 200 and the lower peripheral portion of the measurement well 102a of the cartridge.

An optical system 508 for measuring a quantity of light emitted from a side surface or a bottom surface of the measurement well 102a is installed in the lower dark chamber wall 506. If the optical system is positioned at the upper end of the measurement well 102a, it may be affected by the surface condition such as bubbles in the reagent solution loaded in the measurement well 102a, which may cause degradation of signal reproducibility. When the optical system measures the quantity of light at at least one of the side surface, the bottom surface, and an intermediate position between the side surface and the bottom surface of the measurement well 102a, there is an advantage of measuring the signal without being affected by various surface changes. The PMT 510 shown in FIG. 5 measures an optical signal generated from the side surface of the measurement well 102a.

The shape of the contact area between the upper dark chamber wall 502 and the lower dark chamber wall 506 is configured as a flat or interlocking structure such as an uneven pattern, so as to block entry of external light.

During an idle period when no light quantity measurement is being performed at the measurement well 102a, the upper dark chamber wall 502 ascends and stands by in a stationary position. When light quantity measurement is initiated, the upper dark chamber wall 502 descends, and the upper portion and edge of the measurement well 102a of the cartridge 100 mounted in the cartridge holder 200 closely contact each other to implement the upper dark chamber 500a. Specifically, the upper surface of the cartridge holder 200, the upper surface of the cartridge adjacent to the measurement well 102a, and the upper dark chamber wall 502 closely contact each other to implement the dark chamber above the measurement well 102a.

During an idle period when no light quantity measurement is being performed at the measurement well, the lower dark chamber wall 506 connected to the optical system 508 descends and stands by in a stationary position. When light quantity measurement is initiated at the measurement well 102a, the lower dark chamber wall 506 ascends to implement the lower dark chamber 500b surrounding the measurement well 102a. Specifically, the lower dark chamber wall 506 closely contacts the lower surface of the cartridge holder 200 and the lower surface of the cartridge adjacent to the measurement well 102a to implement the dark chamber below the measurement portion 102a.

During an idle measurement period, when the lower dark chamber wall 506 connected to the PMT optical system 508 descends, external light may enter the PMT 510, so it is necessary to block such entry. When the lower dark chamber wall 506 ascends to implement the dark chamber, the optical path through which light enters the PMT 510 must be open so that the chemiluminescence signal can be measured; during idle periods when the PMT 510 is not in operation, the light entry path of the optical system must be closed. For this purpose, a blocking shutter (or shutter) may be installed at the entrance of the optical path. The blocking shutter can be controlled using power, or can be controlled in a non-powered manner using a spring, a push pin, or the like.

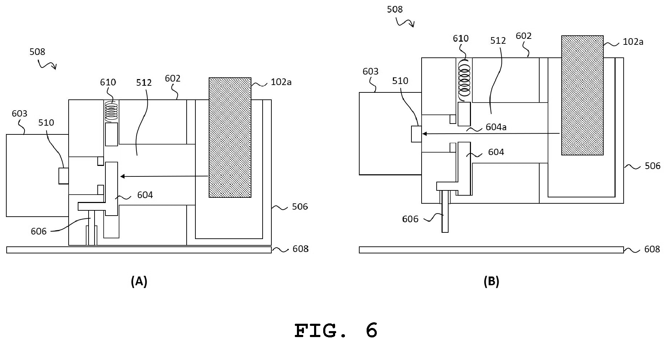

FIG. 6 illustrates the operation of the blocking shutter in the optical system 508 according to an embodiment of the present invention. As shown, the optical system 508 includes a PMT 510, an optical system body 602, a blocking shutter 604, and a push pin 606. The PMT 510 is installed in a PMT housing 603 to block ambient light from entering. The optical system body 601 is attached to the lower dark chamber wall 506 and has an optical path 512 formed therein between the measurement well 102a and the PMT 510.

The optical system 508 includes the blocking shutter 604 configured to prevent light from entering the PMT 510 when the lower dark chamber wall 506 descends away from the measurement well 102a. The blocking shutter 604 is installed in the optical system body 602 so as to be movable upward and downward. The push pin 606 is connected to a lower portion of the blocking shutter 604.

As shown in FIG. 6A, when the lower dark chamber wall 506 descends from the measurement well 102a and the optical system 508 descends, the push pin 606 is pressed by a push pin bracket 608, and the blocking shutter 604 ascends to block the optical path 512. In this state, the PMT 510 is completely sealed by the optical system body 602, the PMT housing 603, and the blocking shutter 604, and entry of light is blocked.

As shown in FIG. 6B, when the lower dark chamber wall 506 ascends to implement the dark chamber around the measurement well 102a, the optical system 508 also ascends together. When the optical system 508 ascends, the compressive force on the push pin 606 is released, and the blocking shutter 604 descends by the elastic force of an elastic member 610 and gravity, so that a shutter opening 604a is positioned in the optical path 512, allowing light generated in the measurement well 102a to enter the PMT 510 and enabling light quantity measurement.

The embodiments of the present invention described above are merely illustrative, and those skilled in the art to which the present invention pertains will appreciate that various modifications and equivalent other embodiments are possible therefrom. Therefore, it will be well understood that the present invention is not limited to the forms mentioned in the above detailed description. Accordingly, the true technical protection scope of the present invention should be determined by the technical spirit of the appended claims. Also, the present invention should be understood to include all modifications, equivalents, and substitutes within the spirit and scope of the present invention as defined by the appended claims.

## Claims

1. An in vitro diagnostic device using a cartridge that employs chemiluminescence, the device comprising:
a cartridge holder made of a light-impermeable material and configured to support the cartridge;
an upper dark chamber wall whose faces other than a bottom face are blocked with a light-impermeable material, the upper dark chamber wall being configured to move upward and downward and, upon measurement of a quantity of light, descending to closely contact an upper peripheral portion of a measurement well of the cartridge; and
a lower dark chamber wall whose faces other than a top face are blocked with a light-impermeable material, the lower dark chamber wall being configured to move upward and downward and, upon measurement of a quantity of light, ascending to closely contact a lower peripheral portion of the measurement well of the cartridge.

2. The in vitro diagnostic device of claim 1, further comprising an injector needle installed in the upper dark chamber wall and configured to inject a chemiluminescent reagent into the measurement well.

3. The in vitro diagnostic device of claim 2, wherein the injector needle is installed in the upper dark chamber wall at an acute angle with respect to a wall surface of the measurement well.

4. The in vitro diagnostic device of claim 1, further comprising an optical system installed in the lower dark chamber wall and including a PhotoMultiplier Tube (PMT) configured to measure a quantity of light emitted from at least one of a side surface and a bottom surface of the measurement well.

5. The in vitro diagnostic device of claim 4, wherein the optical system includes a blocking shutter configured to prevent light from entering the PMT when the lower dark chamber wall descends.

6. The in vitro diagnostic device of claim 5, wherein the optical system comprises:
an optical system body attached to the lower dark chamber wall and having an optical path formed therein between the measurement well and the PMT; and
a push pin connected to a lower portion of the blocking shutter,
wherein the blocking shutter is configured to block the optical path when the push pin is pressed, and to open the optical path when the push pin is not pressed.
